# EUROPÄISCHE PATENTSCHRIFT

(11) **EP 0 994 003 B1**
(45) Veröffentlichungstag und Bekanntmachung des Hinweises auf die Patenterteilung: **09.04.2003**
(21) Anmeldenummer: 99113811.6
(22) Anmeldetag: 15.07.1999
(51) Int. Cl.: B60T 13/68, B60T 8/36

(54) **Ventileinrichtung**
Valve device
Dispositif de soupape

(30) Priorität: 14.10.1998 DE 19847311
(43) Veröffentlichungstag der Anmeldung: 19.04.2000
(73) Patentinhaber: WABCO GmbH & Co. OHG, 30453 Hannover (DE)
(72) Erfinder: Kiel, Bernd, 31515 Wunstorf (DE); Menze, Wilfried, 31832 Springe (DE); Korpack, Georg, 30926 Seelze (DE)
(74) Vertreter: Schrödter, Manfred, Dipl.-Ing.

(56) Entgegenhaltungen:
- EP-A- 0 498 584
- EP-A- 0 547 407
- WO-A-91/06456
- WO-A-91/08934
- DE-A- 3 931 761
- PATENT ABSTRACTS OF JAPAN vol. 1996, no. 07, 31. Juli 1996 (1996-07-31) -& JP 08 058546 A (JIDOSHA KIKI CO LTD), 5. März 1996 (1996-03-05)

## Beschreibung

Die Erfindung betrifft eine Ventileinrichtung gemäß dem Oberbegriff des Patentanspruchs 1.

Eine derartige aus einer Arbeitsventileinrichtung und einer Steuerventileinrichtung bestehende Ventileinrichtung ist durch die Ventilbaugruppe, Gerätenummer 472 500 100 0, der Firma WABCO GmbH bekannt. Die Ventileinrichtung kann in einer mit einer Antiblockierregeleinrichtung ausgerüsteten Fahrzeugbremsanlage eingesetzt werden. Mit dieser Ventileinrichtung können die Bremszylinder der Fahrzeugbremsanlage, unabhängig von dem vom Motorwagen-Bremsventil durchgesteuerten Druck, be- und entlüftet werden, sofern die Steuerventileinrichtung von der ABS-Elektronik aktiviert wird. Im passiven Zustand der Steuerventileinrichtung hat die Ventileinrichtung die Funktion eines Relaisventils, welches zum schnellen Be- und Entlüften der Bremszylinder dient.

Eine der vorstehend beschriebenen Ventileinrichtung ähnliche Ventileinrichtung ist aus der JP 08 058546 A bekannt. Dort sind in einer Fahrzeugbremsanlage ebenfalls eine als Relaisventil ausgebildete Arbeitsventileinrichtung und eine Steuerventileinrichtung angeordnet. Ein Druckmittelausgang der Arbeitsventileinrichtung ist über eine Druckmittelleitung mit einem Druckmitteleingang der Steuerventileinrichtung verbunden. Von einem Druckmittelausgang der Steuerventileinrichtung führt eine Druckmittelleitung zu einem Radbremszylinder der Bremsanlage. Die Steuerventileinrichtung weist ein als Einlassventil dienendes erstes steuerbares Ventil und ein als Auslassventil dienendes zweites steuerbares Ventil auf, wobei das erste steuerbare Ventil mittels eines mit einem Steuerdruck beaufschlagbaren ersten Steuerkolbens und das zweite steuerbare Ventil mittels eines mit einem Steuerdruck beaufschlagbaren zweiten Steuerkolbens betätigbar ist. Die Beaufschlagung des ersten Steuerkolbens mit Steuerdruck erfolgt über ein erstes Elektromagnetventil und die Beaufschlagung des.zweiten Steuerkolbens mit Steuerdruck erfolgt über ein zweites Elektromagnetventil.

Um die Wege für das Druckmittel so kurz wie möglich zu halten, ist es zweckmäßig, die Arbeitsventileinrichtung und die Steuerventileinrichtung möglichst dicht beieinanderliegend zu montieren. Dies kann z.B. in der Weise geschehen, daß die Arbeitsventileinrichtung und die Steuerventileinrichtung auf einem gemeinsamen Träger befestigt oder mit Brückenteilen miteinander verbunden werden. Die Druckmittelverbindungen zwischen der Arbeitsventileinrichtung und der Steuerventileinrichtung werden dann durch möglichst kurze Druckmittelleitungen hergestellt.

Der Erfindung liegt die Aufgabe zugrunde, eine Ventileinrichtung der eingangs erwähnten Art so auszubilden, daß die Anordnung der Ventile der Ventileinrichtung zueinander und die Druckmittelverbindungen der Ventileinrichtung verbessert werden.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Dadurch, daß ein Teil der Steuerventileinrichtung in der Arbeitsventileinrichtung angeordnet ist oder von einem Teil der Arbeitsventileinrichtung gebildet wird, wobei der eine Ventilsitz oder eine Aufnahme für den einen Ventilsitz des einen Elektromagnetventils der Steuerventileinrichtung in oder an der Arbeitsventileinrichtung angeordnet oder von einem Teil der Arbeitsventileinrichtung gebildet wird und wobei die Aufnahme für den einen Steuerkolben der Steuerventileinrichtung von den einander zugewandten Seiten eines Teilbereiches der Arbeitsventileinrichtung und eines Teilbereiches der Steuerventileinrichtung gebildet wird, wird der Vorteil erzielt, die steuerbare Ventileinrichtung der Steuerventileinrichtung und die Elektromagnetventile leicht montieren und demontieren zu können. Da die erwähnten Ventile und der Steuerkolben in den aneinander angrenzenden Bereichen der Arbeitsventileinrichtung und der Steuerventileinrichtung angeordnet sind, muß zum Durchführen von Reparaturarbeiten oder zum Austauschen von Bauteilen lediglich das Gehäuse der Steuerventileinrichtung vom Gehäuse der Arbeitsventileinrichtung abgenommen werden.

Durch das Verbinden des Druckmittelauslasses der Steuerventileinrichtung mit dem Druckmittelauslaß der Arbeitsventileinrichtung kommt die Ventileinrichtung mit nur einem Geräuschdämpfer aus.

Zudem bietet die Erfindung den Vorteil, eine zu einer kompakten Baueinheit zusammengefaßte, aus einer Arbeitsventileinrichtung und einer Steuerventileinrichtung bestehende Ventileinrichtung zu erhalten, die einen einfachen Aufbau aufweist.

Durch das Zusammenfassen von Arbeitsventileinrichtung und Steuerventileinrichtung zu einer kompakten Baueinheit werden die Wege für das Druckmittel verkürzt, wodurch ein besseres Ansprechverhalten der Ventileinrichtung erzielt wird. Es werden zudem Brückenteile eingespart und der Aufwand an externen Druckmittelleitungen und Verschraubungen wird reduziert.

Gemäß einer vorteilhaften Ausgestaltung des Erfindungsgegenstandes ist die Steuerventileinrichtung seitlich am Gehäuseoberteil der Arbeitsventileinrichtung angeordnet. Diese Anordnung hat den Vorteil, daß die elektrische Einrichtung, die zum Verarbeiten von elektrischen Signalen und zum elektrischen Ansteuern der Ventileinrichtung dient, auf die Ventileinrichtung aufgesetzt werden kann.

Anhand einer Zeichnung werden zwei Ausführungsbeispiele der erfindungsgemäßen Ventileinrichtung nachfolgend näher erläutert.

Es zeigen:
- Fig. 1: eine aus einer Arbeitsventileinrichtung und einer Steuerventileinrichtung bestehende Ventileinrichtung, wobei die Steuerventileinrichtung seitlich am Gehäuseunterteil des Gehäuses der Arbeitsventileinrichtung angeordnet ist und
- Fig. 2: eine im wesentlichen der in Fig. 1 gezeigten Ventileinrichtung gleiche Ventileinrichtung, wobei die Steuerventileinrichtung seitlich an dem als Deckel ausgebildeten Gehäuseoberteil der Arbeitsventileinrichtung angeordnet ist.

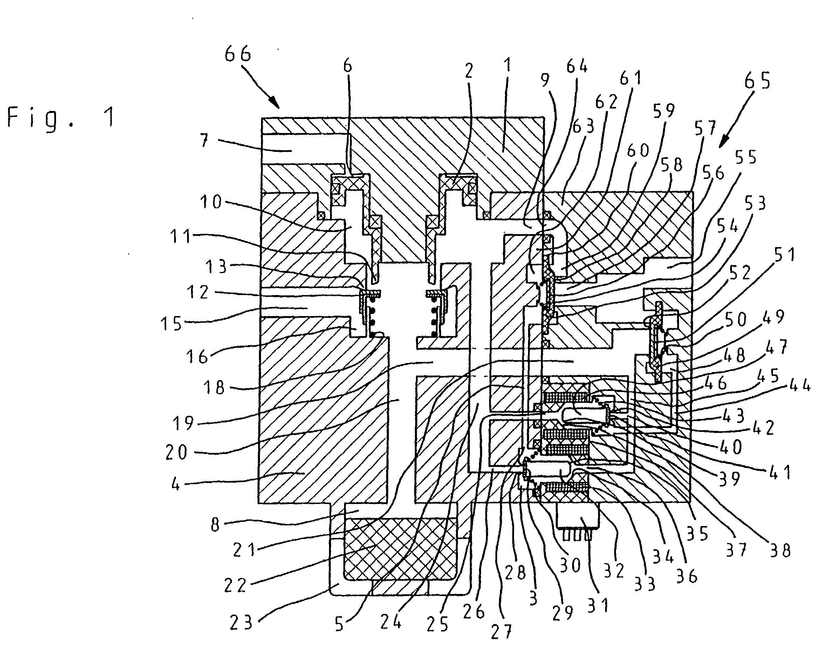

Die in Fig. 1 dargestellte Ventileinrichtung besteht aus einer Arbeitsventileinrichtung (66) und einer mit dieser zu einer Baueinheit zusammengefaßten Steuerventileinrichtung (65).

Die Arbeitsventileinrichtung (66) ist als Relaisventil ausgebildet, welches einen als Relaiskolben (2) dienenden Kolben aufweist, der in einem aus einem Gehäuseunterteil (4) und einem als Deckel ausgebildeten Gehäuseoberteil (1) bestehenden Gehäuse (4, 1) bewegbar angeordnet ist. Der Relaiskolben (2) begrenzt mit seiner einen Seite eine Steuerkammer (6) und mit seiner der Steuerkammer (6) abgewandten anderen Seite eine Druckmittelausgangskammer (10).

Die Druckmittelausgangskammer (10) ist über eine Einlaß- und Auslaßventileinrichtung (13, 12, 11) wahlweise mit einer im Gehäuse (4, 1) angeordneten Druckmitteleingangskammer (16) oder mit einem Druckmittelauslaß (20) des Gehäuses (4, 1) verbindbar oder gegen beide absperrbar. Das Einlaßventil (13, 12) der Einlaß- und Auslaßventileinrichtung (13, 12, 11) besteht aus einem ringförmigen Einlaßsitz (13) und einem relativ zu diesem bewegbar angeordneten Ventilschließglied (12). Das Ventilschließglied (12) wird mittels einer Feder (18) auf dem Einlaßsitz (13) gehalten. Das Auslaßventil (11, 12) wird von dem als Auslaßsitz (11) ausgebildeten freien Ende eines rohrförmigen Fortsatzes des Relaiskolbens (2) und dem Ventilschließglied (12) gebildet. Der Endbereich des Druckmittelauslasses (20) mündet in einen Raum (8), in welchem geräuschdämpfende Mittel (22) angeordnet sind. Die den erwähnten Raum (8) begrenzende Wand weist Durchtrittsöffnungen (23) für das Druckmittel auf. Der Raum (8) und die z.B. aus einem Kunststoffgestrick bestehenden geräuschdämpfenden Mittel (22) sind Bestandteile eines Geräuschdämpfers, der vorzugsweise lösbar mit dem Gehäuse (4, 1) verbunden ist.

Die Steuerkammer (6) ist mit einem Steuereingang (7) des Gehäuses (4, 1) verbunden, welcher über eine nicht dargestellte Ventileinrichtung, z.B. ein Motorwagen-Bremsventil, wahlweise mit einer Steuerdruckquelle oder mit einer Druckmittelsenke verbindbar ist. Die Druckmitteleingangskammer (16) steht mit einem Druckmitteleingang (15) des Gehäuses (4, 1) in Verbindung, der an eine Druckmittelquelle angeschlossen ist. Ein Druckmittelausgang (9) des Gehäuses (4, 1) steht mit der Druckmittelausgangskammer (10) in Verbindung.

Die Steuerventileinrichtung (65) weist ein Gehäuse (63) auf, welches mittels geeigneter Verbindungsmittel, wie z.B. Schrauben, seitlich am Gehäuseunterteil (4) der Arbeitsventileinrichtung (66) befestigt ist. Im Gehäuse (63) der Steuerventileinrichtung (65) sind eine Druckmitteleingangskammer (59), eine Druckmittelausgangskammer (57) und ein Druckmittelauslaß (21) angeordnet. Die Druckmitteleingangskammer (59) ist mit einem Druckmitteleingang (64) des Gehäuses (63) verbunden. Die Steuerventileinrichtung (65) und die Arbeitsventileinrichtung (66) sind so zueinander angeordnet, daß der Druckmitteleingang (64) der Steuerventileinrichtung (65) direkt an den Druckmittelausgang (9) der Arbeitsventileinrichtung (66) anschließt. Die Druckmittelausgangskammer (57) ist mit einem Druckmittelausgang (55) des Gehäuses (63) verbunden. An den Druckmittelausgang (55) ist mittels einer Druckmittelleitung ein z.B. als Bremszylinder ausgebildeter Verbraucher angeschlossen, der hier nicht dargestellt ist.

Die Druckmitteleingangskammer (59) und die Druckmittelausgangskammer (57) der Steuerventileinrichtung (65) sind über ein als Einlaßventil (58, 56) dienendes erstes steuerbares Ventil wahlweise miteinander verbindbar oder gegeneinander absperrbar. Zum Betätigen des Einlaßventils (58, 56) dient ein erster Steuerkolben (53). Der erste Steuerkolben (53) wird von einer Membran gebildet, die mit ihrem äußeren Randbereich zwischen den einander zugewandten Seiten eines Teilbereiches (61) der Arbeitsventileinrichtung (66) und eines Teilbereiches (60) der Steuerventileinrichtung (65) angeordnet ist, wobei sie, z.B. durch Einspannen, zwischen diesen Teilbereichen (61 und 60) befestigt ist. Die Teilbereiche (61 und 60) dienen somit als Aufnahme für den Steuerkolben (53). Das Einlaßventil (58, 56) besteht aus einem gehäusefesten Einlaßsitz (58) und einem Ventilschließglied (56), welches von einem verstärkten Bereich der Membran gebildet wird. Das Ventilschließglied (56) wird von einer Feder (54), die sich mit ihrem einen Ende am Gehäuse (4, 1) der Arbeitsventileinrichtung (66) abstützt und mit ihrem anderen Ende das Ventilschließglied (56) in Richtung auf den Einlaßsitz (58) zu beaufschlagt, auf dem Einlaßsitz (58) gehalten.

Über ein als Auslaßventil (52, 51) dienendes zweites steuerbares Ventil ist die Druckmittelausgangskammer (57) der Steuerventileinrichtung (65) wahlweise mit dem Druckmittelauslaß (21) der Steuerventileinrichtung (65) verbindbar oder gegen diesen absperrbar. Der Druckmittelauslaß (21) der Steuerventileinrichtung (65) mündet in eine Druckmittelleitung (19), die von einem im Gehäuse (4, 1) der Arbeitsventileinrichtung (66) angeordneten Gehäusekanal gebildet wird. Das dem Druckmittelauslaß (21) der Steuerventileinrichtung (65) abgewandte Ende der Druckmittelleitung (19) mündet in den Druckmittelauslaß (20) der Arbeitsventileinrichtung (66). Der Druckmittelauslaß (21) der Steuerventileinrichtung (65) ist somit nicht über die Druckmittelausgangskammer (10) der Arbeitsventileinrichtung (66) sondern direkt mit dem Druckmittelauslaß (20) der Arbeitsventileinrichtung (66) verbunden. Durch diese Ausbildung der Ventileinrichtung (66, 65) wird ein von einem Entlüften der Druckmittelausgangskammer (10) der Arbeitsventileinrichtung (66) unabhängiges Entlüften des Verbrauchers über nur einen Druckmittelauslaß der Ventileinrichtung (66, 65) ermöglicht.

Das Einlaßventil (58, 56) und das Auslaßventil (52, 51) bilden zusammen eine steuerbare Ventileinrichtung (58, 56, 52, 51), mittels welcher, wie bereits erwähnt, die Druckmittelausgangskammer (57) der Steuerventileinrichtung (65) wahlweise mit der Druckmitteleingangskammer (59) oder mit dem Druckmittelauslaß (21) der Steuerventileinrichtung (67) verbindbar ist.

Zum Betätigen des Auslaßventils (52, 51) dient ein zweiter Steuerkolben (49). Der zweite Steuerkolben (49) wird ebenfalls von einer Membran gebildet, die mit ihrem äußeren Randbereich in einer im Gehäuse (63) der Steuerventileinrichtung (65) angeordneten Aufnahme für den zweiten Steuerkolben (49) befestigt ist. Das Auslaßventil (52, 51) besteht aus einem gehäusefesten Auslaßsitz (52) und einem Ventilschließglied (51), welches von einem verstärkten Bereich der Membran gebildet wird. Das Ventilschließglied (51) wird von einer Feder (50) auf dem Auslaßsitz (52) gehalten.

Der erste Steuerkolben (53) begrenzt mit seiner einen Seite die im Gehäuse (63) der Steuerventileinrichtung (65) angeordnete Druckmitteleingangskammer (59) und mit seiner dieser Seite abgewandten anderen Seite eine im Gehäuse (4, 1) der Arbeitsventileinrichtung (66) angeordnete bzw. von einer Ausnehmung in der Wand des Gehäuses (4, 1) der Arbeitsventileinrichtung (66) gebildete erste Steuerkammer (62). Die die erste Steuerkammer (62) bildende Ausnehmung ist in der Seite der Wand des Gehäuses (4, 1) angeordnet, die an die Steuerventileinrichtung (65) angrenzt. Der zweite Steuerkolben (49) begrenzt mit seiner einen Seite die Druckmittelausgangskammer (57) und mit seiner dieser Seite abgewandten anderen Seite eine im Gehäuse (63) der Steuerventileinrichtung (65) angeordnete zweite Steuerkammer (48) der Steuerventileinrichtung (65).

Über eine im Gehäuse (4, 1) der Arbeitsventileinrichtung (66) angeordnete, als Gehäusekanal ausgebildete Druckmittelleitung (5) ist die erste Steuerkammer (62) mit einem Druckmittelausgang (27) eines ersten Elektromagnetventils (28, 29, 34, 35) verbunden. Das als 3/2-Wegeventil ausgebildete erste Elektromagnetventil (28, 29, 34, 35) weist ein Einlaßventil (28, 29) und ein Auslaßventil (34, 35) auf. Ein Druckmitteleingang (26) des Elektromagnetventils (28, 29, 34, 35) wird von einer im Gehäuse (4, 1) der Arbeitsventileinrichtung (66) angeordneten, als Gehäusekanal ausgebildeten Druckmittelleitung gebildet. An den Druckmitteleingang (26) schließt eine im Gehäuse (4, 1) der Arbeitsventileinrichtung (66) angeordnete, ebenfalls als Gehäusekanal ausgebildete weitere Druckmittelleitung (24) an, die den Druckmitteleingang (26) direkt mit der Druckmittelausgangskammer (10) der Arbeitsventileinrichtung (66) verbindet. Das Einlaßventil (28, 29) weist einen Einlaßsitz (28) und ein Ventilschließglied (29) auf, wobei der Einlaßsitz (28) von einem den Druckmitteleingang (26) auf seiner dem Ventilschließglied (29) zugewandten Seite begrenzenden ringförmigen Vorsprung des Gehäuses (4, 1) der Arbeitsventileinrichtung (66) gebildet wird. Das Ventilschließglied (29) des Einlaßventils (28, 29) wird durch die Kraft einer Feder (30) auf dem Einlaßsitz (28) gehalten. Das Auslaßventil (34, 35) besteht aus einem Auslaßsitz (34) und einem Ventilschließglied (35). Die Ventilschließglieder (29 und 35) werden von den Endbereichen eines Ankers (32) gebildet, der mit einer Spule (33) zusammenwirkt. Ein Druckmittelauslaß (36) des ersten Elektromagnetventils (28, 29, 34, 35) steht über eine im Gehäuse (63) der Steuerventileinrichtung (65) angeordnete, als Gehäusekanal ausgebildete Druckmittelleitung (45) mit dem Druckmittelauslaß (21) der Steuerventileinrichtung (65) in Verbindung.

Das erste Elektromagnetventil (28, 29, 34, 35) dient zum wahlweisen Verbinden der ersten Steuerkammer (62) der Steuerventileinrichtung (65) mit der Druckmittelausgangskammer (10) der Arbeitsventileinrichtung (66) oder mit dem Druckmittelauslaß (21) der Steuerventileinrichtung (65). Der Einlaßsitz (28), der Druckmittelausgang (27) und die Feder (30) des ersten Elektromagnetventils (28, 29, 34, 35) sind in einer Ausnehmung (3) des Gehäuses (4, 1) der Arbeitsventileinrichtung (66) angeordnet, wobei die Ausnehmung (3) in der dem Gehäuse (63) der Steuerventileinrichtung (65) zugewandten Seite der Wand des Gehäuses (4, 1) der Arbeitsventileinrichtung (66) angeordnet ist. Die Ausnehmung (3), in welche sich auch der Anker (32) mit dem Ventilschließglied (29) hineinerstreckt, dient somit als Aufnahme für einen Teil des ersten Elektromagnetventils (28, 29, 34, 35). Die Spule (33) und der Auslaßsitz (34) des ersten Elektromagnetventils (28, 29, 34, 35) sind in einer an das Gehäuse (4, 1) der Arbeitsventileinrichtung (66) angrenzenden Ausnehmung (37) des Gehäuses (63) der Steuerventileinrichtung (65) angeordnet.

In der Ausnehmung (37) des Gehäuses (63) der Steuerventileinrichtung (65) ist ein zweites Elektromagnetventil (38, 39, 42, 41) angeordnet, welches ebenfalls als 3/2-Wegeventil ausgebildet ein Einlaßventil (38, 39) und ein Auslaßventil (42, 41) aufweist. Das zweite Elektromagnetventil (38, 39, 42, 41) dient zum wahlweisen Verbinden der zweiten Steuerkammer (48) der Steuerventileinrichtung (65) mit der Druckmittelausgangskammer (10) der Arbeitsventileinrichtung (66) oder mit dem Druckmittelauslaß (21) der Steuerventileinrichtung (65). Das zweite Elektromagnetventil (38, 39, 42, 41) besitzt ein aus einem Einlaßsitz (38) und einem Ventilschließglied (39) bestehendes Einlaßventil (38, 39) und ein aus einem Auslaßsitz (42) und einem Ventilschließglied (41) bestehendes Auslaßventil (42, 41). Das Ventilschließglied (41) des Auslaßventils (42, 41) wird durch die Kraft einer Feder (43) auf dem Auslaßsitz (42) gehalten. Die Ventilschließglieder (39 und 41) werden von den Endbereichen eines Ankers (47) gebildet, der mit einer Spule (46) zusammenwirkt. Ein Druckmitteleingang (25) des zweiten Elektromagnetventils (38, 39, 42, 41) ist über eine im Gehäuse (4, 1) der Arbeitsventileinrichtung (66) angeordnete, als Gehäusekanal ausgebildete Druckmittelleitung mit der im Gehäuse (4, 1) der Arbeitsventileinrichtung (66) angeordneten Druckmittelleitung (24) verbunden. Der Druckmitteleingang (25) des zweiten Elektromagnetventils (38, 39, 42, 41) steht somit ebenfalls direkt mit der Druckmittelausgangskammer (10) der Arbeitsventileinrichtung (66) in Verbindung. Ein Druckmittelausgang des zweiten Elektromagnetventils (38, 39, 42, 41) ist über eine als Gehäusekanal ausgebildete Druckmittelleitung (44) mit der zweiten Steuerkammer (48) verbunden. Ein Druckmittelauslaß (40) des zweiten Elektromagnetventils (38, 39, 42, 41) steht über die Druckmittelleitung (45) mit dem Druckmittelauslaß (21) der Steuerventileinrichtung (67) in Verbindung.

Die beiden Elektromagnetventile (28, 29, 34, 35 und 38, 39, 42, 41) sind mit einer am Gehäuse (63) der Steuerventileinrichtung (67) angeordneten Steckereinrichtung (31) elektrisch verbunden. Die Steckereinrichtung (31) steht mit einer nicht dargestellten elektrischen Auswerte- und Steuereinrichtung in Verbindung.

Zwischen den einander zugewandten Seiten der Arbeitsventileinrichtung (66) und der Steuerventileinrichtung (65) sind Dichtringe so angeordnet, daß sie die Übergangsbereiche von den Druckmittelleitungen der Arbeitsventileinrichtung (66) zu den Druckmittelleitungen der Steuerventileinrichtung (65) ringförmig umschließen.

Die Funktion der vorstehend beschriebenen Ventileinrichtung wird nachfolgend näher erläutert.

Wird in die Steuerkammer (6) der Arbeitsventileinrichtung (66) Steuerdruck eingesteuert, steuert die Arbeitsventileinrichtung (66) einen von der Höhe des Steuerdruckes abhängigen Druck aus. Der ausgesteuerte Druck öffnet das Einlaßventil (58, 56) der Steuerventileinrichtung (65) und gelangt dann durch dieses und den Druckmittelausgang (55) der Steuerventileinrichtung (65) zum Verbraucher. Bei diesem Vorgang steht der Ausgangsdruck der Arbeitsventileinrichtung (66) über das geöffnete Einlaßventil (38, 39) des zweiten Elektromagnetventils (38, 39, 42, 41) auch in der zweiten Steuerkammer (48) der Steuerventileinrichtung (65) an und hält das Auslaßventil (52, 51) in seiner Schließstellung.

Soll ein weiteres Ansteigen des Druckes im Verbraucher trotz eines weiteren Druckanstiegs in der Steuerkammer (6) und in der Druckmittelausgangskammer (10) der Arbeitsventileinrichtung (66) verhindert werden, wird das erste Elektromagnetventil (28, 29, 34, 35) so angesteuert, daß sein Auslaßventil (34, 35) in die Schließstellung und sein Einlaßventil (28, 29) in die Offenstellung gelangt. Über das erste Elektromagnetventil (28, 29, 34, 35) strömt dann Druckluft in die dem Einlaßventil (58, 56) der Steuerventileinrichtung (65) zugeordnete erste Steuerkammer (62). Das Einlaßventil (58, 56) gelangt dann in seine Schließstellung.

Soll der Druck im Verbraucher abgesenkt werden, ohne daß der Druck in der Steuerkammer (6) der Arbeitsventileinrichtung (66) abgesenkt wird, wird das der zweiten Steuerkammer (48) der Steuerventileinrichtung (65) zugeordnete Elektromagnetventil (38, 39, 42, 41) so angesteuert, daß sein Einlaßventil (38, 39) schließt und sein Auslaßventil (42, 41) öffnet. Die zweite Steuerkammer (48) wird dann über den Druckmittelauslaß (21) der Steuerventileinrichtung (65) und den mit diesem verbundenen Druckmittelauslaß (20) der Arbeitsventileinrichtung (66) entlüftet. Über das dann in seine Offenstellung gelangende Auslaßventil (52, 51) der Steuerventileinrichtung (65), sowie den Druckmittelauslaß (21) der Steuerventileinrichtung (65) und den Druckmittelauslaß (20) der Arbeitsventileinrichtung (66) wird der Druck im Verbraucher abgesenkt.

Soll der Druck im Verbraucher durch Druckabbau in der Steuerkammer (6) der Arbeitsventileinrichtung (66) abgesenkt werden, wird auch das erste Elektromagnetventil (28, 29, 34, 35) in der Weise angesteuert, daß sein Einlaßventil (28, 29) in die Schließstellung und sein Auslaßventil (34, 35) in die Offenstellung gelangt. Die dem Einlaßventil (58, 56) der Steuerventileinrichtung (65) zugeordnete erste Steuerkammer (62) wird dann über den Druckmittelauslaß (21) der Steuerventileinrichtung (65) und den Druckmittelauslaß (20) der Arbeitsventileinrichtung (66) entlüftet. Über das dann in seine Offenstellung gelangende Einlaßventil (58, 56) der Steuerventileinrichtung (65), die Druckmittelausgangskammer (10) und den Druckmittelauslaß (20) der Arbeitsventileinrichtung (66) wird der Druck im Verbraucher dann abgesenkt.

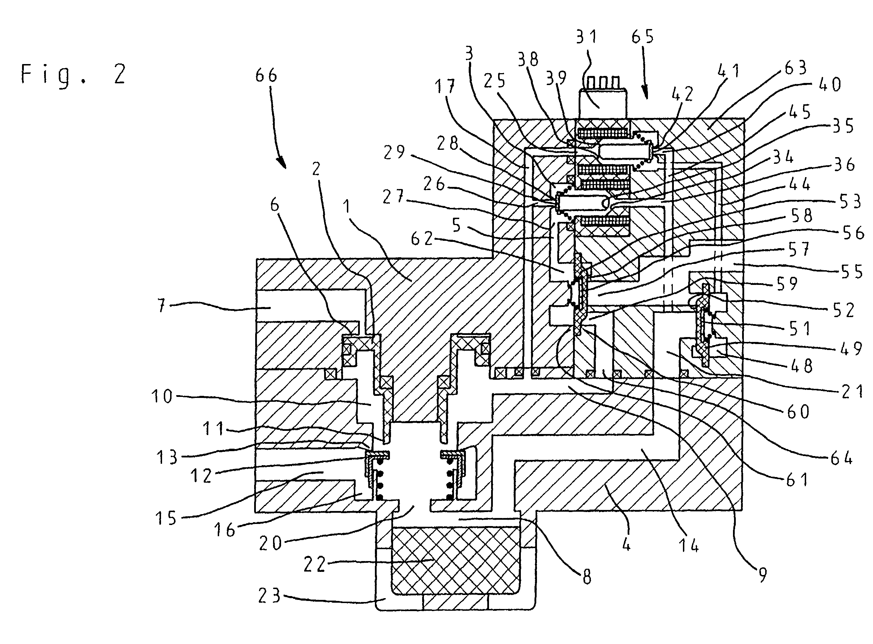

Fig. 2 zeigt eine aus einer Arbeitsventileinrichtung und einer Steuerventileinrichtung bestehende Ventileinrichtung, die im wesentlichen den gleichen Aufbau aufweist wie die in Fig. 1 dargestellte Ventileinrichtung. Die Steuerventileinrichtung ist jedoch nicht seitlich am Gehäuseunterteil (4) sondern seitlich an dem als Deckel ausgebildeten Gehäuseoberteil (1) der Arbeitsventileinrichtung (66) angeordnet. Es wird nachfolgend deshalb nur noch auf die von der Ventileinrichtung gemäß Fig. 1 abweichende Anordnung der Steuerventileinrichtung an der Arbeitsventileinrichtung und die teilweise veränderte Anordnung der als Druckmittelleitungen dienenden Gehäusekanäle eingegangen. Der besseren Übersicht halber sind den in Fig. 1 gezeigten Bauteilen gleiche Bauteile mit gleichen Bezugsziffern versehen.

Wie bereits erwähnt, besteht das Gehäuse (4, 1) der Arbeitsventileinrichtung (66) aus einem Gehäuseunterteil (4) und einem als Deckel für das Gehäuse (4, 1) dienenden Gehäuseoberteil (1). An der einen Seite des Gehäuseoberteiles (1) ist die Steuerventileinrichtung (65) angeordnet. Die Steuerventileinrichtung (65) ist mittels geeigneter Verbindungsmittel, wie z.B. Schrauben, mit der Arbeitsventileinrichtung (66) verbunden. Das Gehäuseunterteil (4) und das Gehäuseoberteil (1) sind so ausgebildet, daß sie eine stufenförmige Ausnehmung begrenzen, die zur Aufnahme der Steuerventileinrichtung (65) dient.

Der von der Membran gebildete erste Steuerkolben (53) für das Einlaßventil (58, 56) der Steuerventileinrichtung (65) ist mit seinem äußeren Randbereich zwischen den einander zugewandten Seiten eines Teilbereiches (61) des Gehäuseoberteiles (1) der Arbeitsventileinrichtung (66) und eines Teilbereiches (60) der Steuerventileinrichtung (65) angeordnet, wobei er durch Einspannen zwischen diesen Teilbereichen (61 und 60) befestigt ist. Der Einlaßsitz (28) des ersten Elektromagnetventils (28, 29, 34, 35) wird von einem ringförmigen Vorsprung des Gehäuseoberteiles (1) der Arbeitsventileinrichtung (66) gebildet, der den Druckmitteleingang (26) auf seiner dem Ventilschließglied (29) zugewandten Seite begrenzt. Der Druckmitteleingang (26) des ersten Elektromagnetventils (28, 29, 34, 35) und der Druckmitteleingang (25) des zweiten Elektromagnetventils (38, 39, 42, 41) sind über eine gemeinsame Druckmittelleitung (17) an den Druckmittelausgang (9) der Arbeitsventileinrichtung (66) angeschlossen. Der Druckmitteleingang (64) der Steuerventileinrichtung (65) ist mit dem Druckmittelausgang (9) der Arbeitsventileinrichtung (66) verbunden und der Druckmittelauslaß (21) der Steuerventileinrichtung (65) steht über eine Druckmittelleitung (14) direkt mit dem dem Druckmittelauslaß (20) der Arbeitsventileinrichtung (66) zugeordneten Raum (8) in Verbindung. Die vorstehend erwähnte Druckmittelleitung (17) wird von einem im Gehäuseoberteil (1) angeordneten Gehäusekanal und die Druckmittelleitung (14) wird von einem im Gehäuseunterteil (4) angeordneten Gehäusekanal der Arbeitsventileinrichtung (66) gebildet.

Zwischen den einander zugewandten Seiten des Gehäuses (4, 1) der Arbeitsventileinrichtung (66) und des Gehäuses (63) der Steuerventileinrichtung (65) sind die Übergänge von den Druckmittelleitungen der Arbeitsventileinrichtung (66) zu den Druckmittelleitungen der Steuerventileinrichtung (65) sowie der Übergang vom Druckmittelausgang (9) der Arbeitsventileinrichtung (66) zum Druckmitteleingang (64) der Steuerventileinrichtung (65) ringförmig umschließende Dichtelemente angeordnet.

Der an den Druckmittelauslaß (21) der Steuerventileinrichtung (65) anschließende, im Gehäuse (4, 1) der Arbeitsventileinrichtung (66) angeordnete Kanal -Druckmittelleitung (14)- mündet in denselben Raum (8), in den auch der Druckmittelauslaß (20) der Arbeitsventileinrichtung (66) mündet. Dieser Raum (8) kann der einlaßseitige Raum eines Geräuschdämpfers sein, wie es in der Figurenbeschreibung erwähnt ist, es kann jedoch auch der von einem Anschlußstutzen für den Geräuschdämpfer der Arbeitsventileinrichtung begrenzte Raum oder ein den Druckmittelauslaß (20) mit dem Kanal -Druckmittelleitung (14)-verbindender beliebiger anderer Raum der Arbeitsventileinrichtung (66) sein. In allen Fällen gilt, daß der Druckmittelauslaß (21) der Steuerventileinrichtung (65) mit dem Druckmittelauslaß (20) der Arbeitsventileinrichtung (66) verbunden ist. Es wird in allen Fällen nur ein Geräuschdämpfer für die Arbeitsventileinrichtung (66) und für die Steuerventileinrichtung (65) benötigt.

Die Elektromagnetventile (28, 29, 34, 35 und 38, 39, 42, 41) sind so in der Ausnehmung (37) der Steuerventileinrichtung (65) angeordnet, daß die elektrischen Kontaktelemente der Steckereinrichtung (31) im wesentlichen senkrecht zum Gehäuseoberteil (1) der Ventileinrichtung (66, 65) verlaufen. Die Steckereinrichtung (31) befindet sich somit an der Oberseite der Ventileinrichtung (66, 65).

Da, wie in den beiden Ausführungsbeispielen der Erfindung deutlich erkennbar ist, die Steuerkammer (62) für das Einlaßventil (58, 56) der Steuerventileinrichtung (65), der Druckmitteleingang (26), der Ventilsitz (28) und der Druckmittelausgang (27) des einen Elektromagnetventils (28, 29, 34, 35) der Steuerventileinrichtung (65) und auch die die Steuerkammer (62) des Einlaßventils (58, 56) der Steuerventileinrichtung (65) mit dem Druckmittelausgang (27) des Elektromagnetventils (28, 29, 34, 35) verbindende Druckmittelleitung (5) im Gehäuse (4, 1) der Arbeitsventileinrichtung (66) angeordnet sind und zudem ein Teil der Aufnahme für den einen Steuerkolben (53) von einem Teilbereich (61) der Arbeitsventileinrichtung (66) gebildet wird, ist ein Teil der Steuerventileinrichtung (65) in der Arbeitsventileinrichtung (66) angeordnet oder wird ein Teil der Steuerventileinrichtung (65) von der Arbeitsventileinrichtung (66) gebildet.

Gemäß einer vorteilhaften Ausführungsform der Erfindung ist es auch möglich, den Druckmittelauslaß (36) des ersten Elektromagnetventils (28, 29, 34, 35) und den Druckmittelauslaß (40) des zweiten Elektromagnetventils (38, 39, 42, 41) mittels als Gehäusekanäle ausgebildeter Druckmittelleitungen direkt mit dem Druckmittelauslaß (20) der Arbeitsventileinrichtung (66) oder mit dem Raum (8) zu verbinden.

Gemäß einer vorteilhaften Ausführungsform der Erfindung können auch die Aufnahmen für die Steuerkolben (53 und 49) beider steuerbaren Ventile (58, 56 und 52, 51) von Teilbereichen der einander zugewandten Seiten der Arbeitsventileinrichtung (66) und der Steuerventileinrichtung (65) gebildet werden.

Als Steuerdruck für die beiden steuerbaren Ventile (58, 56 und 52, 51) kann sowohl der Druck der Druckmittelausgangskammer (10) der Arbeitsventileinrichtung (66) als auch der Druck einer beliebigen anderen Druckmittelquelle, z.B. der Vorratsdruck, dienen.

Die erfindungsgemäße Ventileinrichtung kann sowohl in einer pneumatischen als auch in einer hydraulischen Anlage eingesetzt werden, wobei dies eine Kraftfahrzeugbremsanlage oder eine mit Druckmittel arbeitende beliebige andere Anlage sein kann.

## Patentansprüche

1. Ventileinrichtung mit folgenden Merkmalen:
a) die Ventileinrichtung besteht aus einer Arbeitsventileinrichtung (66) und einer Steuerventileinrichtung (65);
b) die Arbeitsventileinrichtung (66) weist ein Gehäuse (4, 1) mit einer Druckmitteleingangskammer (16), einer Druckmittelausgangskammer (10) und einem zu einer Druckmittelsenke hinführenden Druckmittelauslaß (20) auf;
c) die Druckmittelausgangskammer (10) ist über eine im Gehäuse (4, 1) angeordnete Einlaß- und Auslaßventileinrichtung (13, 12, 11) wahlweise mit der Druckmitteleingangskammer (16) oder mit dem Druckmittelauslaß (20) verbindbar oder gegen beide absperrbar;
d) die Steuerventileinrichtung (65) weist eine Druckmitteleingangskammer (59), eine Druckmittelausgangskammer (57) und einen Druckmittelauslaß (21) auf, wobei die Druckmittelausgangskammer (57) über eine steuerbare Ventileinrichtung (58, 56, 52, 51) wahlweise mit der Druckmitteleingangskammer (59) oder mit dem Druckmittelauslaß (21) der Steuerventileinrichtung (65) verbindbarist;
e) die Druckmittelausgangskammer (10) der Arbeitsventileinrichtung (66) ist mit der Druckmitteleingangskammer (59) der Steuerventileinrichtung (65) verbunden;
f) die steuerbare Ventileinrichtung (58, 56, 52, 51) weist ein erstes steuerbares Ventil (58, 56) und ein zweites steuerbares Ventil (52, 51) auf;
g) zum Betätigen des ersten steuerbaren Ventils (58, 56) dient ein erster Steuerkolben (53) und zum Betätigen des zweiten steuerbaren Ventils (52, 51) dient ein zweiter Steuerkolben (49), wobei der erste Steuerkolben (53) mit dem Druckmittel einer ersten Steuerkammer (62) der Steuerventileinrichtung (65) und der zweite Steuerkolben (49) mit dem Druckmittel einer zweiten Steuerkammer (48) der Steuerventileinrichtung (65) beaufschlagbar ist;
h) es ist eine Aufnahme für den ersten Steuerkolben (53) und eine Aufnahme für den zweiten Steuerkolben (49) der Steuerventileinrichtung (65) vorgesehen;
i) die Steuerventileinrichtung (65) weist ein erstes Elektromagnetventil (28, 29, 34, 35) mit einem ersten Ventilsitz (28) und einem zweiten Ventilsitz (34) und ein zweites Elektromagnetventil (38, 39, 42, 41) mit einem ersten Ventilsitz (38) und einem zweiten Ventilsitz (42) auf;
**gekennzeichnet durch** die folgenden Merkmale:
k) die Arbeitsventileinrichtung (66) und die Steuerventileinrichtung (65) sind so ausgebildet und so miteinander verbunden, dass wenigstens ein Teil der Steuerventileinrichtung (65) in der Arbeitsventileinrichtung (66) angeordnet ist oder von dieser gebildet wird, wobei wenigstens der erste Ventilsitz (28) wenigstens des ersten Elektromagnetventils (28, 29, 34, 35) oder eine Aufnahme für den ersten Ventilsitz (28) in oder an der Arbeitsventileinrichtung (66) angeordnet ist oder von einer Teil der Arbeitsventileinrichtung (66) gebildet wird oder/und wenigstens die Aufnahme für wenigstens den ersten Steuerkolben (53) von den einander zugewandten Seiten eines Teilbereiches (61) der Arbeitsventileinrichtung (66) und eines Teilbereiches (60) der Steuerventileinrichtung (65) gebildet wird;
l) der Druckmittelauslaß (21) der Steuerventileinrichtung (65) ist mit dem Druckmittelauslaß (20) der Arbeitsventileinrichtung (66) verbunden.

2. Ventileinrichtung nach Anspruch 1, **dadurch gekennzeichnet, daß** das Gehäuse (4, 1) der Arbeitsventileinrichtung (66) aus einem Gehäuseunterteil (4) und einem Gehäuseoberteil (1) besteht und daß die Steuerventileinrichtung (65) seitlich am Gehäuseoberteil (1) und/oder seitlich am Gehäuseunterteil (4) der Arbeitsventileinrichtung (66) angeordnet ist.

3. Ventileinrichtung nach Anspruch 1, **dadurch gekennzeichnet,**
**daß** das erste steuerbare Ventil (58, 56) der steuerbaren Ventileinrichtung (58, 56, 52, 51) als Einlaßventil (58, 56) und das zweite steuerbare Ventil (52, 51) als Auslaßventil dient.

4. Ventileinrichtung nach wenigstens einem der vorhergehenden Ansprüche 1 oder 3, **dadurch gekennzeichnet, daß** wenigstens der dem ersten steuerbaren Ventil (58, 56) der Steuerventileinrichtung (65) zugeordnete erste Steuerkolben (53) von einer Membran gebildet wird, die mit ihrem äußeren Randbereich zwischen den einander zugewandten Seiten der Teilbereiche (61 und 60) der Arbeitsventileinrichtung (66) und der Steuerventileinrichtung (65) eingespannt ist.

5. Ventileinrichtung nach Anspruch 1, **dadurch gekennzeichnet, daß** wenigstens die erste Steuerkammer (62) im Gehäuse (4, 1) der Arbeitsventileinrichtung (66) angeordnet ist oder von einer Ausnehmung in der Wand des Gehäuses (4, 1) der Arbeitsventileinrichtung (66) gebildet wird, wobei die Ausnehmung auf der Seite dieser Wand angeordnet ist, die an die Steuerventileinrichtung (65) angrenzt.

6. Ventileinrichtung nach wenigstens einem der vorhergehenden Ansprüche 1,4 oder 5, **gekennzeichnet durch** die folgenden Merkmale:
a) über das erste Elektromagnetventil (28, 29, 34, 35) ist die erste Steuerkammer (62) wahlweise mit einem Steuerdruck beaufschlagbar oder mit einer Druckmittelsenke verbindbar ;
b) über das zweite Elektromagnetventil (38, 39, 42, 41) ist die zweite Steuerkammer (48) wahlweise mit einem Steuerdruck beaufschlagbar oder mit einer Druckmittelsenke verbindbar;
c) jedes der beiden Elektromagnetventile (28, 29, 34, 35 bzw. 38, 39, 42, 41) weist einen Druckmitteleingang (26 bzw. 25), einen Druckmittelausgang (27) und einen Druckmittelauslaß (36 bzw. 40) auf, wobei der Druckmittelauslaß (36 bzw. 40) über eine Druckmittelleitung (45) mit dem Druckmittelauslaß (21) der Steuerventileinrichtung (65) verbunden ist.

7. Ventileinrichtung nach Anspruch 6, **gekennzeichnet durch** die folgenden Merkmale:
a) die Arbeitsventileinrichtung (66) weist eine Aufnahme für einen Teil des ersten Elektromagnetventils (28, 29, 34, 35) der Steuerventileinrichtung (65) auf;
b) die Aufnahme wird von einer Ausnehmung (3) in der Wand des Gehäuses (4, 1) der Arbeitsventileinrichtung (66) gebildet, die an die Steuerventileinrichtung (65) angrenzt;
c) der erste Ventilsitz (28) des ersten Elektromagnetventils (28, 29, 34, 35) ist in der Ausnehmung (3) angeordnet;
d) die Ausnehmung (3) ist so ausgebildet, daß sie wenigstens einen Teil des Ventilschließgliedes (29) des ersten Elektromagnetventils (28, 29, 34, 35) aufnimmt;
e) der Druckmitteleingang (26) und der Druckmittelausgang (27) des ersten Elektromagnetventils (28, 29, 34, 35) sind in der Wand des Gehäuses (4, 1) der Arbeitsventileinrichtung (66) angeordnet, derart, daß der Druckmitteleingang (26) an den ersten Ventilsitz (28) und der Druckmittelausgang (27) an die Ausnehmung (3) anschließt.

8. Ventileinrichtung nach wenigstens einem der vorhergehenden Ansprüche 6 oder 7, **dadurch gekennzeichnet, daß** die erste Steuerkammer (62) der Steuerventileinrichtung (65) über eine im Gehäuse (4, 1) der Arbeitsventileinrichtung (66) angeordnete Druckmittelleitung (5) mit dem Druckmittelausgang (27) des ersten Elektromagnetventils (28, 29, 34, 35) der Steuerventileinrichtung (65) verbunden ist.

## Claims

1. Valve device having the following features:
a) the valve device consists of a working valve device (66) and a control valve device (65);
b) the working valve device (66) comprises a housing (4, 1) having a pressure medium inlet chamber (16), a pressure medium exit chamber (10) and a pressure medium outlet (20) leading to a pressure medium drain;
c) the pressure medium exit chamber (10) is connectible via an inlet and outlet valve device (13, 12, 11) arranged in the housing (4, 1) selectively to the pressure medium inlet chamber (16) or to the pressure medium outlet (20) or is arranged to be blocked with respect to both;
d) the control valve device (65) comprises a pressure medium inlet chamber (59), a pressure medium exit chamber (57) and a pressure medium outlet (21), the pressure medium exit chamber (57) being connectible via a controllable valve device (58, 56, 52, 51) selectively to the pressure medium inlet chamber (59) or to the pressure medium outlet (21) of the control valve device (65);
e) the pressure medium exit chamber (10) of the working valve device (66) is connected to the pressure medium inlet chamber (59) of the control valve device (65);
f) the controllable valve device (58, 56, 52, 51) comprises a first controllable valve (58, 56) and a second controllable valve (52, 51);
g) a first control piston (53) is used to actuate the first controllable valve (58, 56) and a second control piston (49) is used to activate the second controllable valve (52, 51), the first control piston (53) being arranged to be acted upon by the pressure medium of a first control chamber (62) of the control valve device (65) and the second control piston (49) being arranged to be acted upon by the pressure medium of a second control chamber (48) of the control valve device (65);
h) a locating means is provided for the first control piston (53) and a locating means is provided for the second control piston (49) of the control valve device (65);
i) the control valve device (65) comprises a first electromagnetic valve (28, 29, 34, 35) having a first valve seat (28) and a second valve seat (34) and a second electromagnetic valve (38, 39, 42, 41) having a first valve seat (38) and a second valve seat (42);
**characterised by** the following features:
k) the working valve device (66) and the control valve device (65) are so constructed and so connected with one another that at least a part of the control valve device (65) is arranged in the working valve device (66) or is formed thereby, at least the first valve seat (28) at least of the first electromagnetic valve (28, 29, 34, 35) or a locating means for the first valve seat (28) is arranged in or on the working valve device (66) or is formed by a part of the working valve device (66) or/and at least the locating means for at least the first control piston (53) is formed by the facing sides of a partial region (61) of the working valve device (66) and a partial region (60) of the control valve device (65);
l) the pressure medium outlet (21) of the control valve device (65) is connected to the pressure medium outlet (20) of the working valve device (66).

2. Valve device according to claim 1, **characterised in that** the housing (4, 1) of the working valve device (66) consists of a housing bottom part (4) and housing top part (1) and the control valve device (65) is arranged laterally on the housing top part (1) and/or laterally on the housing bottom part (4) of the working valve device (66).

3. Valve device according to claim 1, **characterised in that** the first controllable valve (58, 56) of the controllable valve device (58, 56, 52, 51) serves as inlet valve (58, 56) and the second controllable valve (52, 51) serves as outlet valve.

4. Valve device according to at least one of the preceding claims 1 or 3, **characterised in that** at least the first control piston (53) associated with the first controllable valve (58, 56) of the control valve device (65) is formed by a diaphragm that is clamped with its outer edge region between the facing sides of the partial regions (61 and 60) of the working valve device (66) and the control valve device (65).

5. Valve device according to claim 1, **characterised in that** at least the first control chamber (62) is arranged in the housing (4, 1) of the working valve device (66) or is formed by a recess in the wall of the housing (4,1) of the working valve device (66), the recess being arranged on the side of that wall that adjoins the control valve device (65).

6. Valve device according to at least one of the preceding claims 1, 4 or 5, **characterised by** the following features:
a) *via* the first electromagnetic valve (28, 29, 34, 35) the first control chamber (62) is selectively pressurisable with a control pressure or connectible to a pressure medium drain;
b) *via* the second electromagnetic valve (38, 39, 42, 41) the second control chamber (48) is selectively pressurisable with a control pressure or connectible to a pressure medium drain;
c) each of the two electromagnetic valves (28, 29, 34, 35 and 38, 39, 42, 41 respectively) comprises a pressure medium inlet (26, 25 respectively), a pressure medium exit (27) and a pressure medium outlet (36, 40 respectively), the pressure medium outlet (36, 40 respectively) being connected by way of a pressure medium line (45) to the pressure medium outlet (21) of the control valve device (65).

7. Valve device according to claim 6, **characterised by** the following features:
a) the working valve device (66) comprises a locating means for part of the first electromagnetic valve (28, 29, 34, 35) of the control valve device (65);
b) the locating means is formed by a recess (3) in the wall of the housing (4, 1) of the working valve device (66) that adjoins the control valve device (65);
c) the first valve seat (28) of the first electromagnetic valve (28, 29, 34, 35) is arranged in the recess (3);
d) the recess (3) is so constructed that it receives at least a part of the valve closure member (29) of the first electromagnetic valve (28, 29, 34, 35);
e) the pressure medium inlet (26) and the pressure medium exit (27) of the first electromagnetic valve (28, 29, 34, 35) are arranged in the wall of the housing (4, 1) of the working valve device (66) in such a way that the pressure medium inlet (26) adjoins the first valve seat (28) and the pressure medium exit (27) adjoins the recess (3).

8. Valve device according to at least one of the preceding claims 6 or 7, **characterised in that** the first control chamber (62) of the control valve device (65) is connected by way of a pressure medium line (5) arranged in the housing (4, 1) of the working valve device (66) to the pressure medium exit (27) of the first electromagnetic valve (28, 29, 34, 35) of the control valve device (65).

## Revendications

1. Dispositif de soupapes comprenant les éléments suivants :
a) le dispositif de soupapes est constitué par un dispositif de soupape de travail (66) et par un dispositif de soupape de commande (65) ;
b) le dispositif de soupape de travail (66) comprend un boîtier (4, 1) comportant une chambre d'entrée de fluide sous pression (16), une chambre de sortie de fluide sous pression (10) et un échappement de fluide sous pression (20) menant vers une bâche de fluide sous pression ;
c) la chambre de sortie de fluide sous pression (10) peut être reliée au choix à la chambre d'entrée de fluide (16) ou à l'échappement de fluide (20), ou bien être obturée par rapport aux deux via un dispositif de clapet d'admission et d'échappement (13, 12, 11) ;
d) le dispositif de soupape de commande (65) comprend une chambre d'entrée de fluide sous pression (59), une chambre de sortie de fluide sous pression (57) et un échappement de fluide sous pression (21), la chambre de sortie de fluide sous pression (57) pouvant être reliée au choix à la chambre d'entrée de fluide sous pression (59) ou à l'échappement de fluide sous pression (21) du dispositif de soupape de commande (65) via un dispositif de soupape commandé (58, 56, 52, 51) ;
e) la chambre de sortie de fluide sous pression (10) du dispositif de soupape de travail (66) est reliée à la chambre d'entrée de fluide sous pression (59) du dispositif de soupape de commande (65) ;
f) le dispositif de soupape commandé (58, 56, 52, 51) comprend une première soupape commandée (58, 56) et une deuxième soupape commandée (52, 51) ;
g) un premier piston de commande (53) sert à actionner la première soupape commandée (58, 56), et un deuxième piston de commande (49) sert à actionner la deuxième soupape commandée (52, 51), le premier piston de commande (53) pouvant être alimenté en fluide sous pression d'une première chambre de commande (62) du dispositif de soupape de commande (65) et le deuxième piston de commande (49) pouvant être alimenté en fluide sous pression d'une deuxième chambre de commande (48) du dispositif de soupape de commande (65) ;
h) il est prévu un logement pour le premier piston de commande (53) et un logement pour le deuxième piston de commande (49) du dispositif de soupape de commande (65) ;
i) le dispositif de soupape de commande (65) comprend une première vanne électromagnétique (28, 29, 34, 35) avec un premier siège de vanne (28) et avec un deuxième siège de vanne (34), et une deuxième vanne électromagnétique (38, 39, 42, 41) avec un premier siège de vanne (38) et avec un deuxième siège de vanne (42) ;
**caractérisé par** les caractéristiques suivantes :
k) le dispositif de soupape de travail (66) et le dispositif de soupape de commande (65) sont réalisés et reliés l'un à l'autre de telle sorte qu'au moins une partie du dispositif de soupape de commande (65) est agencée dans le dispositif de soupape de travail (66) ou est formée par celui-ci,
dans lequel au moins le premier siège de vanne (28) au moins de la première vanne électromagnétique (28, 29, 34, 35) ou un logement pour le premier siège de vanne (28) est agencé dans ou sur le dispositif de soupape de travail (66) ou est formé par une partie du dispositif de soupape de travail (66), et/ou au moins le logement au moins pour le premier piston de commande (53) est formé par les faces tournées l'une vers l'autre d'une zone partielle (61) du dispositif de soupape de travail (66) et d'une zone partielle (60) du dispositif de soupape de commande (65);
l) l'échappement de fluide sous pression (21) du dispositif de soupape de commande (65) est relié à l'échappement de fluide sous pression (20) du dispositif de soupape de travail (66).

2. Dispositif de soupapes selon la revendication 1, **caractérisé en ce que** le boîtier (4, 1) du dispositif de soupape de travail (66) est constitué par une partie de boîtier inférieure (4) et par une partie de boîtier supérieure (1), et **en ce que** le dispositif de soupape de commande (65) est agencé latéralement sur la partie de boîtier supérieure (1) et/ou latéralement sur la partie de boîtier inférieure (4) du dispositif de soupape de travail (66).

3. Dispositif de soupapes selon la revendication 1, **caractérisé en ce que** la première soupape commandée (58, 56) du dispositif de soupape commandé (58, 56, 52, 51) sert de soupape d'admission (58, 56), et la deuxième soupape commandée (52, 51) sert de soupape d'échappement.

4. Dispositif de soupapes selon l'une ou l'autre des revendications 1 et 3, **caractérisé en ce qu'**au moins le premier piston de commande (53) associé à la première soupape commandée (58, 56) du dispositif de soupape de commande (65) est formé par un diaphragme qui est serré par sa zone marginale extérieure entre les faces tournées l'une vers l'autre des zones partielles (61 et 60) du dispositif de soupape de travail (66) et du dispositif de soupape de commande (65).

5. Dispositif de soupapes selon la revendication 1, **caractérisé en ce qu'**au moins la première chambre de commande (62) est agencée dans le boîtier (4, 1) du dispositif de soupape de travail (66) ou est formée par un logement dans la paroi du boîtier (4, 1) du dispositif de soupape de travail (66), le logement étant ménagé sur la face de la paroi qui est adjacente au dispositif de soupape de commande (65).

6. Dispositif de soupapes selon l'une des revendications 1, 4 ou 5, **caractérisé par** les caractéristiques suivantes :
a) la première chambre de commande (62) peut au choix être alimentée en pression de commande ou être reliée à une bâche de fluide sous pression via la première vanne électromagnétique (28, 29, 34, 35) ;
b) la deuxième chambre de commande (48) peut au choix être alimentée en pression de commande ou être reliée à une bâche de fluide sous pression via la deuxième vanne électromagnétique (38, 39, 42, 41) ;
c) chacune des deux vannes électromagnétiques (28, 29, 34, 35 ou 38, 39, 42, 41) comprend une entrée de fluide sous pression (26 ou 25), une sortie de fluide sous pression (27) et un échappement de fluide sous pression (36 ou 40), l'échappement de fluide sous pression (36 ou 40) étant relié à l'échappement de fluide sous pression (21) du dispositif de soupape de commande (65) via une conduite à fluide sous pression (45).

7. Dispositif de soupapes selon la revendication 6, **caractérisé par** les caractéristiques suivantes :
a) le dispositif de soupape de travail (66) comprend un logement pour une partie de la première vanne électromagnétique (28, 29, 34, 35) du dispositif de soupape de commande (65) ;
b) le logement est formé par un évidement (3) dans la paroi du boîtier (4, 1) du dispositif de soupape de travail (66), qui est adjacente au dispositif de soupape de commande (65) ;
c) le premier siège de vanne (28) de la première vanne électromagnétique (28, 29, 34, 35) est agencé dans l'évidement (3) ;
d) l'évidement (3) est ménagé de manière à recevoir une partie au moins de l'organe de fermeture (29) de la première vanne électromagnétique (28, 29, 34, 35) ;
e) l'entrée de fluide sous pression (26) et la sortie de fluide sous pression (27) de la première vanne électromagnétique (28, 29, 34, 35) sont agencées dans la paroi du boîtier (4, 1) du dispositif de soupape de travail (66), de telle sorte que l'entrée de fluide sous pression (26) se raccorde au premier siège de vanne (28) et la sortie de fluide sous pression (27) se raccorde à l'évidement (3).

8. Dispositif de soupapes selon l'une ou l'autre des revendications 6 et 7, **caractérisé en ce que** la première chambre de commande (62) du dispositif de soupape de commande (65) est reliée à la sortie de fluide sous pression (27) de la première vanne électromagnétique (28, 29, 34, 35) du dispositif de soupape de commande (65) via une conduite à fluide sous pression (5) agencée dans le boîtier (4, 1) du dispositif de soupape de travail (66).
